# EUROPEAN PATENT SPECIFICATION

(11) **EP 2 272 376 B1**
(45) Date of publication and mention of the grant of the patent: **26.04.2017**
(21) Application number: 09165162.0
(22) Date of filing: 10.07.2009
(51) Int. Cl.: A23L 5/00, A23C 19/16, A23P 20/10

(54) **Method for providing a coated cheese**
Verfahren zur Bereitstellung eines beschichteten Käses
Procédé pour fournir un fromage revêtu

(43) Date of publication of application: 12.01.2011
(73) Proprietor: CSK Food Enrichment B.V., 8938 AS Leeuwarden (NL)
(72) Inventor: Koopmans, Wieger Jan, 8911 ET Leeuwarden (NL); Hijlkema, Tette, 8403 BH Jonkerslan, (NL); Delnoye, Didier André Pierre, 9721 RW Groningen (NL); Meijer, Willem Cornelis, 6712 HA Ede (NL)
(74) Representative: Nederlandsch Octrooibureau

(56) References cited:
- EP-A1- 1 464 232
- EP-A2- 1 469 017
- WO-A2-01/80658
- WO-A2-02/074856
- GB-A- 761 856
- NL-A- 8 403 100
- US-B1- 6 274 162

## Description

### Field of the invention

The present invention relates to a novel method for coating cheese as well as to a cheese coating composition which is especially suited to be employed in said method.

### Background of the invention

Industrially produced cheese, especially of the semi-hard or hard type, is commonly treated several times with a water-borne cheese coating composition comprising a polymer obtainable by emulsion polymerisation. Most water-borne cheese coating compositions usually further contain one or more additives for preventing unwanted or excessive microbiological contamination of the cheese, especially with moulds. Such additives commonly include natamycin and/or sorbic acid, or salts thereof. An example of a commercially available aqueous cheese coating composition comprising a polymer obtainable by emulsion polymerisation and natamycin is Ceska WL 200.03.45. This cheese coating composition has a solids content of approx. 42 wt.% with respect to the total weight of the composition, and a Brookfield viscosity, when measured at room temperature, of approx. 4.5 Pa.s.

EP 1464232 teaches aqueous food coating compositions comprising particles of a film forming material in combination with food-compatible particles from a sheet-like water-swellable material, specifically water-swellable clay particles. The object of EP 1464232 is to provide food coating compositions which reduce moisture egress from a food coated therewith. Example 1 describes a method for preparing a clay-enriched coating for cheese by adding, with stirring, 90 g of a natural sodium bentonite clay into 3 kg of a standard coating for foods such as cheese, CESKA WL 250. Example 2 describes a method for preparing a composition comprising mixing 90 g of a natural sodium-bentonite clay and 90 g of water, and adding to the swollen clay mass thus obtained to 3 kg of Ceska WL 250. Because the viscosity of the mixture hereby increased strongly, a thick paste was obtained which was too thick to be applied to the cheese. To facilitate application of the coating to the cheese, 1000 ml of extra water was added.

EP 1464232 further describes, in Example 8, a method for coating Gouda cheeses wherein the coatings obtained in Examples 1 and 2 are applied on one half-side of brine-dry model Gouda cheese. After 24 hours, the applied layers proved sufficiently dry and the cheeses were turned over for the other half side to be provided with a coating layer as well. The cheeses were stored in a cheese store on wooden shelves using otherwise conventional ripening conditions and conventional treatments such as periodic turning over. In total, in 8 steps, 4 layers of coating were applied on each side over a period of 4 weeks. The cheeses thus prepared were compared with each other and a cheese covered with the standard coating.

According to EP 1464232 A1, the concentration of film forming material in the aqueous base is not critical, and may range between 1-80 wt.%. However, especially in view of the drying time, contents of 20-70 wt.% and preferably 30-60 wt.% of the film-forming material are said to be preferred.

EP 1469017 discloses a coating composition for foodstuff, such as hard cheese, comprising water-borne dispersions of polyvinylester copolymers of maleinic and/or fumaric esters. In the Examples, water-borne copolymer dispersions are disclosed having a solids content of about 48 wt.%, and Brookfield viscosities above 17 Pa.s.

### Summary of the invention

The method for coating cheese described in Example 8 of EP 1464232 comprises a repeated half-sided application of a coating composition to a cheese, followed by drying the applied layer further comprising conventional treatments such as turning over. Herein, each half-sided application is performed with the one and the same coating composition.

It is also noted that today, most industrially produced cheese, especially semi-hard and hard cheese, is coated with a standard aqueous cheese coating composition, such as Ceska WL 200.03.45 and the like, preferably according to a conventional protocol described in EP164232, *i.e.* comprising an optionally repeated sequence of half-sided applications of the coating composition followed by allowing the applied coating layer to dry, turning the cheese and applying another half-sided coating layer to the cheese. Herein, the cheese is coated until it has obtained a desired ripening time and all half-sided coating treatments are performed. The standard aqueous cheese coating compositions which are used for such coating treatments comprise a solids content of 40-60 wt.%.

It has been found that the known methods for coating cheese according to the prior art suffer from one or more disadvantages, particularly in that no optimal balance is obtained regarding quality of the coated cheese and process economy. Herein, process economy especially, amongst others, relates to the total amount of coating solids applied to a cheese from the time of its production until it has obtained the desired ripening time. In particular, known coating methods may provide coated cheeses which are not optimally protected on one hand, and have good cutting or slicing properties on the other hand. In particular, it has been found that if a cheese is repeatedly treated according to an above-mentioned conventional protocol, from its production until it has obtained the desired degree of ripening, with a low solids coating composition, it can be favourably sliced or cut, especially without significant deformation of the cheese and/or damage to the internal structure of the cheese. However, at the same time, especially during the time it receives its first coating treatments, it may not be optimally protected. In particular, it will be more difficult to cover, using a low solids coating composition, any defects or irregularities which may typically occur in or on the surface of a cheese. As a consequence, the cheese may be more vulnerable towards microbial attack. In addition, or alternatively, a cheese which receives its first coating treatments with a low solids coating may be relatively vulnerable to mechanical damage. If the coating is mechanically damaged, which may occur especially during conventional (industrial) handling procedures such as turning, piling or transportation, it becomes vulnerable to microbial spoilage, especially due to fungi. On the other hand, if a cheese is repeatedly treated according to an above-mentioned conventional protocol, from its production until it has obtained the desired degree of ripening, with a high solids coating composition, it can be well protected, even during the time it receives it first coating treatments. However, the thus obtained conventionally coated cheese which has obtained the desired degree of ripening can be difficult to slice or cut, especially without deforming the cheese and/or damaging the internal structure of the cheese, or manual slicing and/or cutting may just require a lot of (physical) effort. More generally, the cheese which is eventually obtained when exclusively coated with a high solids coating composition will have received more coating solids than needed for allowing sufficient protection. The terms "low solids coating composition" and "high solids coating composition" are defined here below.

Surprisingly, it has been found that one or more of the deficiencies can be overcome and in particular an improved balance regarding quality of the coated cheese and process economy can be obtained if a cheese is first coated with a high solids coating, and subsequently with a low solids coating. Thus, in a first aspect, the invention provides a method for providing a coated cheese comprising
a. coating at least part of a cheese with a high solids coating composition and
b. coating at least part of the cheese thus obtained with a low solids coating composition, wherein
   - the high solids coating composition is an aqueous cheese coating composition and comprises a solids content selected from the range of 35-80 wt.% with respect to the total weight of the high solids coating composition;
   - the low solids coating composition is an aqueous cheese coating composition and comprises a solids content selected from the range of 15-40 wt.% with respect to the total weight of the low solids coating composition; and
   - the selected solids content of the low solids coating composition is at least 10% lower than the selected solids content of the high solids coating composition.

Preferably, the selected solids content of the low solids coating composition is at least 15%, more preferably at least 20%, most preferably at least 25% lower than the selected solids content of the high solids coating composition. It is further preferred that the selected solids content of the low solids coating composition is lower than the selected solids content of the high solids coating composition by not more than 50%, more preferably 40%, most preferably 35%. Herein, it is especially preferred that the high solids coating composition has a solids content selected from the range of 38-65 wt.%, more preferably 40-60 wt.% with regard to the total weight of the high solids coating composition and that the low solids coating composition has a solids content selected from the range of 15-34 wt.%, more preferably 20-34 wt.%, most preferably 24-32 wt.% with regard to the weight of the low solids coating composition. Best results are obtained within the indicated ranges, especially with regard to process economy and quality of the coated cheese.

As a preferred example, the high solids coating composition may comprise a solids content of 40 wt.% with respect to the weight of the high solids composition, and the low solids composition may comprise a solids content of 30 wt.% with respect to the low solids composition. According to this example, the low solids composition has a solids content which is 25% lower than the solids content of the high solids composition.

In another aspect, the present invention provides an aqueous cheese coating composition having a solids content selected from the range of 20-34 wt.% with respect to the total weight of the composition, comprising a polymer obtainable by emulsion polymerisation and an organic thickener selected from the group consisting of a poly(vinyl alcohol), poly(vinyl pyrrolidone), xanthan gum, guar gum, locust bean gum, carrageenan, hydroxyethylcellulose, hydroxypropylcellulose, hydroxypropylmethylcellulose, carboxymethylcellulose or a salt thereof, and methylcellulose, wherein the aqueous cheese coating composition is essentially free of particles from a sheetlike water-swellable material, and specifically water-swellable clay particles; and wherein the aqueous cheese coating composition has a Brookfield viscosity, when measured at room temperature, of 1-15 Pa.s, preferably 2-8 Pa.s.

Described is an aqueous cheese coating composition which is especially suited to be employed as the low solids coating composition in the method for providing a coated cheese. Incidentally, it is remarked that Example 2 of EP 1464232 describes an aqueous cheese coating composition having a solids content of ca. 32 wt.% and comprising a natural sodium bentonite clay. The clay is present in an amount of ca. 2 wt.% relative to the total weight of the composition. It is remarked that the presence of (such) water-swellable clay particles or more generally of particles from a sheetlike water-swellable material, is generally disadvantageous. In particular, the viscosity of a cheese coating composition comprising such sheetlike water-swellable particles may be hard to control. Such particles may be difficult to process, particularly to provide homogeneous mixing into a liquid composition (such as an aqueous cheese coating composition) whilst achieving complete and reproducible exfoliation of the sheetlike structure(s) and/or may harm apparatus. Additionally or alternatively, flexibility, transparency and/or gloss of a dried coating may be negatively influenced by such particles. Accordingly, it is described an aqueous cheese coating composition having a solids content selected from the range of 15-34 wt.%, preferably 20-34 wt.% with respect to the total weight of the composition, which comprises a polymer obtainable by emulsion polymerisation and an organic thickener, wherein the aqueous cheese coating composition is essentially free of particles from a sheetlike water-swellable material, and specifically water-swellable clay particles. Herein, the phrase "sheetlike water-swellable material" is preferably defined as in EP 1464232, especially §37. It is further noted that the meaning of the term "sheetlike water-swellable material" as used in EP1464232 seems to correspond to that of "water-swellable (or swelling) mineral" or preferably "water-swellable (or swelling) clay". The aqueous cheese coating composition is therefore preferably alternatively defined as an aqueous cheese coating composition having a solids content selected from the range of 15-34 wt.%, preferably 20-34 wt.% with respect to the total weight of the composition, which comprises a polymer obtainable by emulsion polymerisation and an organic thickener, wherein the aqueous cheese coating composition is essentially free of particles from a water-swellable (or swelling) mineral, specifically a water-swellable (or swelling) clay, wherein preferably the clay is of the type bentonite, montmorillonite, saponite, hectorite, fluorohectorite, beidelite, nontronite, vermiculite, halloysite and/or stevensite. It is further preferred that the aqueous cheese coating composition is essentially free of inorganic particles. Such particles, especially clay particles, may enhance brittleness of a dried film formed from an aqueous cheese coating composition. As a consequence, the film becomes more vulnerable to mechanical damage, so that cracks may form more easily. In those cracks, microbiological spoilage, such as by fungi, may be initiated. Herein, "essentially free" preferably relates to "less than 0.5 wt.%, more preferably less than 0.25 wt.% based on the weight of the polymer obtainable by emulsion polymerisation".

The organic thickener is preferably selected as a poly(vinyl alcohol), poly(vinyl pyrrolidone), a protein or a derivative thereof, and a polysaccharide or a derivative thereof. The presence of the organic thickener favourably provides the aqueous cheese coating composition with a viscosity which is suitable for applying half-sided coating layers to a cheese. Preferably, the aqueous cheese coating composition has a Brookfield viscosity, when measured at room temperature, of 1-20 Pa.s, more preferably of 2-8 Pa.s.

The aqueous cheese coating composition having a solids content selected from the range of 15-40 wt.%, preferably 20-34 wt.% with respect to the total weight of the composition, may be prepared according to the method comprising
- Providing an aqueous polymer dispersion (or base dispersion) comprising a polymer obtainable by emulsion polymerisation, preferably comprising the polymer in an amount of 40-60 wt.% with respect to the total weight of the aqueous polymer dispersion,
- Providing an organic thickener, preferably in the form of an aqueous solution,
- Mixing the aqueous polymer dispersion and the added organic thickener.
The aqueous polymer dispersion (or base dispersion) is preferably provided in an amount of 30-80 wt.% relative to the total weight of the aqueous cheese coating composition. The organic thickener is preferably provided in an amount of 0.25-5 wt.% relative to the total weight of the composition. The polymer is preferably obtainable by emulsion polymerisation in the presence of a protective colloid. The aqueous cheese coating composition according to the invention and the low solids coating composition employed in the method of the invention are preferably obtained according to this method.

### Detailed description of the invention

### Definitions and conventions

The Brookfield viscosity of an aqueous cheese coating composition is preferably determined according to a method based on ISO 2555 (2^{nd} edition, 1989-02-01; corrected and reprinted 1990-02-01). The viscosity of the coating composition is measured at room temperature (= 20-25 °C, preferably ca. 23 °C) using a Brookfield viscometer, preferably of type LVDV-E and preferably operated at speed 30 rpm, and preferably using spindle number 4. The viscosity meter is levelled and the spindle is attached to the apparatus. The spindle is then immersed into the sample up to the mark on the spindle. The measurement is started and the result is taken at steady state or after one minute.

The solid matter content of an aqueous cheese coating composition is preferably determined according to a method based on ISO 1625 (2^{nd} edition, 1998-02-15). Herein, a small amount of the coating composition is weighed onto a flat surface provided by a first culture dish (diameter ± 60 mm), and a surface of a second culture dish is pressed against the surface of the first culture dish, comprising the coating composition. The weights of the two culture disks are known to the nearest mg. A thin film of the coating composition is applied on the two surfaces of the culture dishes by gently moving the touching surfaces in circular or ellipsoidal orbits. The dishes are then separated to expose their coated surfaces to the atmosphere. The dishes are then transferred into an oven which is heated to 105°C, and are left at that temperature for one hour. Afterwards, the dishes are transferred into a desiccator and allowed to cool to room temperature. The dishes are weighed with the attached films to the nearest 1 mg, and the solid matter content is calculated from the difference between the mass of the applied wet coating composition and the weight of the dry film.

The term "organic" has its known meaning within the field of chemistry and preferably relates to "comprising carbon and hydrogen, more preferably further comprising at least oxygen".

The term "(organic) thickener" has its usual meaning and preferably refers to an (organic) agent which is capable to increase the viscosity of an aqueous solution when dissolved therein.

The term "a poly(vinyl alcohol)" relates to a partially or fully saponified poly(vinyl alcohol), wherein said polyvinyl alcohol is preferably obtainable by saponification of poly(vinyl acetate), further preferably to a degree of 70-100%.

The term "additive" preferably relates to an additive suitable for cheese coating compositions and is further preferably selected from the group consisting of an acid, a base, a salt, a surfactant, a colourant (such as annatto) and a fungicide. The fungicide is preferably selected as a polyene fungicide, more preferably as natamycin.

### Preferred embodiments of the high solids coating composition and of the low solids coating composition.

Both the high solids coating composition and the low solids coating composition preferably comprise a polymer obtainable by emulsion polymerisation. This polymer, which may be the same or different for the high and the low solids coating composition, preferably has a glass transition temperature of 4-25 °C, more preferably of 10-20 °C, wherein the glass transition temperature is preferably determined using differential scanning calorimetry, especially according to DIN 53765, version of March 1994 (DSC, heating rate 20 K/min, film is dried at 23°C and 50% humidity according to DIN EN 23270). Accordingly, the polymer has optimal film-forming properties under typical storage conditions for semi-hard and hard cheese, particularly Gouda-type cheese.

Preferably, the polymer obtainable by emulsion polymerisation is obtainable by emulsion polymerisation of one or more monomers selected from the group consisting of vinylic and acrylic esters of saturated fatty acids having from 2-16 carbon atoms, a vinyl versatate, ethylene, and maleic and fumaric mono- and diesters of saturated alcohols having from 4-8 carbon atoms. Said polymer is most preferably obtainable by polymerization of a monomer mixture comprising (1) vinyl acetate and dibutylmaleate, (2) vinyl acetate and ethylene, (3) vinyl acetate and n-butylacrylate, or (4) vinyl acetate and a vinyl versatate, wherein the monomer mixture comprises said two different monomers in a total amount of at least 80 wt.%, more preferably of at least 90 wt.% with respect to the weight of the monomer mixture.

The high solids coating composition and the low solids coating composition preferably each have a Brookfield viscosity, when measured at room temperature, of 1-20 Pa.s, more preferably of 1-15 Pa.s, most preferably of 2-8 Pa.s. Accordingly, these coating compositions can be suitably applied to a cheese by means of conventional cheese coating machines comprising rotating felt pads or brushes, or the like. Such coating machines are suitable commercially available, for example as a Plastima machine type 611, ex Doeschot, The Netherlands.

The high solids coating composition may optionally comprise an organic thickener. The low solids coating composition preferably comprises an organic thickener. Herein, any organic thickener, which preferably comprises any dissolved protective colloid, if present, is preferably determined as at least 80 wt.%, more preferably as at least 90 wt.%, most preferably as at least 95 wt.% of the combustible soluble solid matter obtainable according to a method comprising centrifugation of the aqueous cheese coating composition to form a pellet and a transparent or translucent supernatant, isolating the supernatant, driving off most of the water and any other volatile fluids (preferably using a rotary evaporator, at temperatures between 30-90 °C and under reduced pressure) and drying the residue obtained at ca. 105 °C for approx. 1 hour. Herein, "combustible solid matter" has its ordinary meaning and preferably relates to the material of the residue which, after drying at ca. 105 °C for approx. 1 hour, is not present as ashes. The relative amount and/or identity of the organic thickener, optionally comprising any dissolved protective colloid, and optionally of any other (combustible) soluble solid matter is suitably determined by applying conventional analytical techniques, such as NMR and/or mass spectrometry, to the residue dried at ca. 105 °C for approx. 1 hour.

Preferably, for the high solids coating and/or for the low solids coating composition, the polymer obtainable by emulsion polymerisation is a polymer obtainable by emulsion polymerisation in the presence of a protective colloid. The protective colloid is preferably selected as a poly(vinyl alcohol) and/or as a cellulose derivative, preferably a cellulose ether such as hydroxyethylcellulose. Accordingly, the application properties of the aqueous cheese coating composition may be further improved.

The protective colloid will preferably be present in the coating composition in the form of dissolved protective colloid and grafted protective colloid. Any dissolved protective colloid comprised by an aqueous cheese coating composition preferably relates to the protective colloid fraction which resides in the transparent or translucent supernatant obtainable by centrifugation the said coating composition, wherein said centrifugation comprises separation of said coating composition to obtain a pellet and a transparent or translucent supernatant. Any grafted protective colloid comprised by an aqueous cheese coating composition preferably relates to the protective colloid fraction which resides in the pellet obtainable by centrifugation the said coating composition, wherein said centrifugation comprises separation of said coating composition to obtain a pellet and a transparent or translucent supernatant.

Any dissolved protective colloid present in an aqueous cheese coating composition may effectively act as a thickener thereof. The term "organic thickener" therefore preferably comprises any dissolved protective colloid, if present. Any protective colloid which may be grafted to the polymer obtainable by emulsion polymerisation is preferably considered to be part of said polymer fraction. Herein, preferably, the amount of grafted protective colloid is less than 10 wt.%, more preferably less than 6 wt.% with respect to the total amount of polymer obtainable by emulsion polymerisation.

For both the high solids coating composition and the low solids coating composition, the polymer obtainable by emulsion polymerisation (optionally comprising any grafted protective colloid) preferably provides at least 50 wt.%, more preferably at least 70 wt.%, most preferably at least 90 wt% of the solids content of the (respective high solids and low solids) coating compositions. Accordingly, a dried coating layer having favourable properties can be formed, especially with regard to its protective properties.

For both the high solids and the low solids coating composition, the polymer obtainable by emulsion polymerisation, optionally comprising any grafted protective colloid, is preferably determined as at least 80 wt.%, more preferably at least 90 wt.%, even more preferably at least 95 wt.%, most preferably at least 98 wt.%, of the combustible non-dissolved solid matter obtainable according to a method comprising centrifugation of the aqueous cheese coating composition to form a pellet and a transparent or translucent supernatant, isolating the pellet and drying it at ca. 105 °C for approx. 1 hour. Herein, "combustible solid matter" has its ordinary meaning and preferably relates to the weight fraction of the isolated pellet which, after drying at ca. 105 °C for approx. 1 hour, is not present as ashes. The relative amount and/or identity of the polymer obtainable by emulsion polymerisation, and optionally of any grafted protective colloid is suitably determined by applying conventional analytical techniques, such as NMR and/or mass spectrometry, to the pellet material which is preferably dried at ca. 105 °C for approx. 1 hour before analysis.

The high solids coating composition and the low solids coating composition preferably comprise ashes in an amount of less than 1 wt.%, more preferably less than 0.5 wt.% or 0.25 wt.% with respect to the total weight of the composition. Herein, ashes are preferably determined as the dry rest which is left after subjecting the coating compositions to thermal decomposition conditions, preferably in the presence of oxygen. Ashes can be suitably determined preferably by subjecting said material to a temperature of approx. 400 °C for approx. 4 hours in an atmosphere containing oxygen. The lower the amount of ashes, the better the quality of a dried coating film.

Herein, it is understood that the polymer obtainable by emulsion polymerisation, the organic thickener (if present), the Brookfield viscosity, the ashes content, the protective colloid etc. may be the same or different for the high and the low solids coating composition, provided that the requirements regarding the solids contents of the respective compositions as described in the Summary are met.

### Preferred embodiments specific of the high solids coating composition.

The high solids coating composition preferably comprises a polymer obtainable by emulsion polymerisation in the presence of a protective colloid. According to this embodiment, the high solids coating composition preferably comprises less than 1 wt.%, more preferably less than 0.5 wt.% most preferably less than 0.25 wt.% of an organic thickener other than any dissolved protective colloid which may be present. Any organic thickener which may be present is preferably selected as one or more preferred thickeners indicated below for the low solids coating composition. The concentration of dissolved protective colloid in the high solids coating composition is preferably less than 5 wt.%, more preferably less than 4 wt.% most preferably less than 3 wt.% with respect to the total weight of the high solids composition. Furthermore, the total amount of the organic thickener comprised by the high solids coating composition is preferably less than 5 wt.% with respect to the total weight of the high solids composition.

The polymer obtainable by emulsion polymerisation is preferably provided in the form of a base dispersion. Especially if said polymer is obtainable by emulsion polymerisation in the presence of a protective colloid, the high solids cheese coating composition is preferably obtainable by a method comprising a base dispersion, preferably providing an aqueous liquid, optionally providing one or more additives, and preferably diluting the base dispersion with an aqueous liquid to obtain the desired viscosity. A preferred base dispersion, comprising a polymer obtainable by emulsion polymerisation in the presence of a protective colloid, is suitably commercially available, for example as Mowilith SDM 4230 KL, ex Celanese Emulsions GmbH, Frankfurt am Main, Germany. Alternatively, a suitable base dispersion comprising a polymer obtainable by emulsion polymerisation in the presence of a protective colloid may be provided as the poly(vinyl ester) dispersion according to any one of claims 1-8 of WO 03/054041 (PCT/EP02/14709), with Celanese as applicant. A preferred high solids coating composition comprising a polymer obtainable by emulsion polymerisation in the presence of a protective colloid is conveniently commercially available, for example as Ceska WL 200.03.45 ex CSK Food Enrichment, Leeuwarden, The Netherlands.

### Preferred embodiments specific of the low solids coating composition

The low solids coating composition may be suitably obtained by a method comprising providing a high solids coating composition and/or a base dispersion, providing an aqueous liquid, preferably providing an organic thickener and optionally providing one or more additives. A suitable base dispersion is commercially available, for example as Mowilith SDM 4230 KL, ex Celanese Emulsions GmbH, Frankfurt am Main, Germany. Alternatively, a suitable base dispersion may be provided as the poly(vinyl ester) dispersion according to any one of claims 1-8 of WO 03/054041 (PCT/EP02/14709), with Celanese as applicant.

As indicated above, the low solids coating composition preferably comprises an organic thickener in order to obtain a suitable application viscosity. The organic thickener is preferably selected as one or more thickeners from the group consisting of a poly(vinyl alcohol), poly(vinyl pyrrolidone), a protein or a derivative thereof, and a polysaccharide or a derivative thereof. These thickeners may have the advantage of being food-grade. The organic thickener is preferably completely dissolved in the low solids coating composition. This is advantageous for its properties, especially with regard to gloss of a film formed from the composition.

The polysaccharide is preferably selected from the group consisting of a gum, a cellulose derivative, starch and a starch derivative. Preferred cellulose derivatives are carboxymethylcellulose or a salt thereof, hydroxyethylcellulose, hydroxypropylcellulose, methylcellulose and hydroxypropylmethylcellulose. The carboxymethylcellulose is preferably a sodium carboxymethylcellulose. The gum is preferably selected from the group consisting of carrageenan, xanthan gum, guar gum and locust bean gum. Poly(vinyl alcohol)s, poly(vinyl pyrrolidone), carboxymethylcellulose or a salt thereof, hydroxypropylcellulose and hydroxyethylcellulose are especially preferred organic thickeners in view of the flow behaviour of the water-borne coating composition.

Preferably, the organic thickener is selected as one or more thickeners from the group consisting of a poly(vinyl alcohol), poly(vinyl pyrrolidone), xanthan gum, guar gum, locust bean gum, hydroxyethylcellulose, hydroxypropylcellulose, hydroxypropylmethylcellulose, carrageenan, carboxymethylcellulose or a salt thereof, and methylcellulose. The polymer obtainable by emulsion polymerisation is preferably a polymer obtainable by emulsion polymerisation in the presence of a protective colloid. Accordingly, the total amount of an organic thickener needed to achieve a suitable application viscosity of the low solids cheese coating composition level may be reduced. Hydroxypropylmethylcellulose, hydroxyethylcellulose, carboxymethylcellulose (or a salt thereof) and methyl cellulose may provide for especially favourable application properties. The use of xanthan gum advantageously allows for very stable viscosity stability on storage.

As discussed above, if the polymer is obtainable by emulsion polymerisation in the presence of a protective colloid, which is a preferred embodiment, then some protective colloid may be dissolved in the aqueous cheese coating composition. Any dissolved protective colloid is preferably considered part of the organic thickener. According to this embodiment, the organic thickener is preferably present as a mixture comprising (1) a poly(vinyl alcohol) and (2) one or more polymers selected from the group consisting of poly(vinyl pyrrolidone), xanthan gum, guar gum, locust bean gum, carrageenan, hydroxyethylcellulose, hydroxypropylcellulose, hydroxypropylmethylcellulose, carboxymethylcellulose or a salt thereof, and methylcellulose.

The organic thickener is preferably present in a total amount of 0.1-10 wt.%, more preferably 0.25-9 wt.% more preferably 0.5-7 wt.% with respect to the weight of the low solids cheese coating composition. The presence of relatively low amounts of thickeners in the low solids composition is favourable in view of the properties of a dried coating film obtained there from, especially in view of tack.

It is especially preferred that at least 90 wt.%, preferably at least 95 wt.%, more preferably at least 97 wt.% with regard to the solids content of the low solids coating composition according to the invention is provided by the polymer obtainable by emulsion polymerisation and any organic thickener which may be present, including any protective colloid which may be present. Accordingly, a dried coating layer having good mechanical properties may be obtained.

In an embodiment, the low solids composition comprises less than 20 wt.%, preferably less than 10 wt.%, more preferably less than 5 wt.% or less than 2 wt.% of a polymer obtainable by emulsion polymerisation and having a glass transition temperature which is 25 °C or higher (which polymer is especially selected as poly(vinyl acetate), relative to the total amount of the polymer obtainable by emulsion polymerisation. Accordingly, film formation of the low solids coating is further promoted.

It is especially preferred that a film formed from the low solids coating composition, when having a thickness of 300 µm, has a water vapour permeability of less than 140 g/m².24h, more preferably less than 125 g/m².24h, most preferably less than 100 g/m².24h. Accordingly, moisture egress from the cheese can be even better controlled by the low solids coating composition. The water vapour permeability is preferably higher than 10 g/m².24h so that favourable ripening of the cheese under common ripening conditions may be provided. Herein the water vapour permeability is preferably determined by a method comprising determining the weight loss, over a period of 7 days, from a container comprising water and having an opening which is sealed with the film formed from said polymer and having a thickness of 300 µm wherein said container is subjected to a relative humidity of 50% and a temperature of 23%. The method for determining the water vapour permeability is preferably according to §88-93 of EP 1541600 A1.

Such a low solids coating composition is preferably obtainable by a method comprising providing a polymer obtainable by emulsion polymerisation in an amount of at least 20 wt.% with respect to the total weight of the low solids coating composition, providing an organic thickener, preferably in an amount of 0.25-5 wt.%, more preferably 0.5 - 3 wt.% with respect to the total weight of the low solids coating composition, optionally providing water, preferably providing one or more additives, preferably in an amount of 0.01-3 wt.% with respect to the total weight of the low solids coating composition, and mixing these ingredients. Herein, the polymer obtainable by emulsion polymerisation is selected such that a film formed from said polymer and having a thickness of 300 µm has a water vapour permeability of preferably less than 140 g/m².24h, even more preferably less than 125 or less than 100 g/m².24h. Herein, the water vapour permeability is preferably higher than 10 g/m².24h. Such a preferred polymer is preferably obtainable by emulsion polymerisation of vinyl acetate and a vinyl versatate, wherein the vinyl versatate is preferably selected as a mixture of vinyl esters of branched carboxylic acids with 8-16 carbon atoms An especially preferred polymer is obtainable by copolymerisation of 60-70 wt.% vinyl acetate and 30-40 wt.% of a mixture of vinyl esters of branched carboxylic acids with 11 carbon atoms, further preferably according to Example 1 of WO2005/102062. Alternatively, a preferred polymer is provided as a copolymer dispersion based on vinyl carboxylate esters, alkyl maleate and/or fumarate and/or alpha-olefin monomers plus comonomers with non-ionic or ionic stabilising groups, and containing only 0.1-4.5 parts by weight of a protective colloid (preferably polyvinyl alcohol). Such a polymer is especially preferably obtained according to one of the methods of claims 16-22 as described in EP 1541600 A1, or selected as a polymer according to one of Examples 1-6 and/or claims 1-15 as described in EP 1541600 A1.

In this embodiment, it is especially preferred that in addition, a film formed from the high solids coating composition has a water vapour permeability, determined as indicated above, of between 140 and 400 g/m².24h, more preferably of between 150 and 300 g/m².24h, especially of about 170 g/m².24h. Accordingly, a particularly well-balanced control of moisture evaporation from the cheese can be obtained from the time it is provided in (a.) until the cheese has obtained a desired ripening time. Such a high solids composition preferably comprises a polymer obtainable by emulsion polymerisation in the presence of a protective colloid which is provided as the poly(vinyl ester) dispersion according to any one of claims 1-8 of WO 03/054041 (PCT/EP02/14709). A preferred high solids composition, having a water vapour permeability (as defined above) of about 170 g/m².24h is suitable commercially available, for example as Ceska WL 200.03.45, ex CSK Food Enrichment, Leeuwarden, The Netherlands.

### The method for providing a coated cheese

Before coating with the high solids coating composition under (a.), the cheese is preferably provided as a freshly shaped and salted cheese. More preferably, the freshly shaped and salted cheese is freshly brined. The freshly brined cheese has preferably left the brine bath between 0-48 hours before it receives its first coating treatment (with the high solids coating composition). If the freshly shaped and salted cheese is obtained by brining in a brine bath, the coated cheese obtained in (a.) preferably has an age of between 8-18 days after leaving the brine bath, before it is treated for the first time with the low solids coating composition. Such cheese is preferably ready for consumption, and the application of any water-borne coating composition is preferably ended after the cheese have reached an age of 24-600 days after leaving the brine bath. Coating at least part of the cheese with the high solids coating composition preferably comprises
i. Applying a layer of the high solids coating composition to the top and at least part of the edge of the cheese; and
ii. Allowing the applied coating to dry.
This sequence application (i.) - drying (ii.) is preferably repeated at least once, more preferably 2-8 times, most preferably 3-6 times. Further preferably, before application of each subsequent layer of the high solids coating composition the cheese is turned.

Coating at least part of the cheese with the low solids coating composition preferably comprises
I. Applying a layer of the low solids coating composition to the top and at least part of the edge of the cheese; and
II. Allowing the applied coating to dry on the cheese.
Herein the sequence application (I.) - drying (II.) is preferably repeated at least once, more preferably 2-60 times, most preferably 6-50 times. Further preferably, before application of each subsequent layer of the low solids coating composition the cheese is turned.

Herein, the term "top" indicates the surface of a cheese that faces up when the cheese is on a support, preferably a shelve. The phrase "applying a layer of a (low solids or high solids) coating composition to the top and least part of the edge of the cheese" preferably relates to "applying a layer of the (low solids or high solids) coating composition to a half-side of the cheese." Half-sided application of a coating layer to a cheese is known to the person skilled in the art. Half sided coating, drying, and turning is repeated, especially until the desired ripening (and desired coating) is obtained. It is especially preferred that the low solids coating composition and the high solids coating composition have approximately the same viscosity so that they can be applied without adjusting the settings of a coating application machine. It is further preferred that the high solids coating composition and the low solids coating composition are applied to the cheese (per coating treatment) in an amount of 50-100 g of the coating composition (wet weight) per m². Preferably, the viscosity of the low solids coating composition is in the range of 75-125%, especially 90-110% of the viscosity of the coating composition selected as high solids coating composition (see for instance above defined Brookfield viscosities).

It is especially preferred that after at least part of the cheese has been coated with the high solids composition in (a.), at least part of the cheese thus obtained is exclusively coated with the low solids coating composition, until the cheese has obtained a desired degree of ripening.

In between treatments with the high solids and the low solids cheese coating compositions, especially during drying of the applied coating layers, the cheese is typically stored at a temperature of 4-25 °C, more preferably at a temperature of 8-18 °C, most preferably at a temperature of 10-14 °C and at a relative humidity of 70-98%, more preferably of 82-92%. Accordingly, optimal ripening conditions are provided for the cheese.

The freshly shaped and salted cheese and coated cheese obtained in (a.) are preferably produced on the same premises. Preferably, stages (a) and (b) of the method for providing a coated cheese are preferably performed on different premises. According to this preferred embodiment, optimal use can be made of the limited storage capacity of a cheese production factory.

The water-borne cheese coating composition is preferably applied to the cheese using a (rotating) brush, a roller a sponge, or a similar application device, such as a coating machine comprising (rotating) felt pads.

The cheese is preferably a semi-hard or hard cheese which preferably has a flat-cylindrical or block shape, and is further preferably selected from the group consisting of Emmental, Gruyere, Tilsit, Danbo, and a Gouda-type cheese. Herein, "Gouda-type" is known to the person skilled in the art and preferably comprises cheeses such as Gouda, Proosdij and Maasdam. The cheeses may have any fat and/or salt content.

It is preferred that the cheeses to be coated are placed or held on a shelf, which is typically made of wood.

The invention also provides a method for further coating a coated cheese, said method comprising
- Providing a cheese which comprises a protective layer covering its surface, said layer comprising a synthetic polymer and having a thickness of on average 10-300 µm, more preferably 25-200, most preferably 35-100 µm; and
- Applying the low solids coating composition to said cheese.
Herein, the cheese which comprises a protective layer covering its surface is preferably obtainable by coating the cheese with the high solids coating composition in (a.).

### The aqueous cheese coating composition according to the present invention

Any preferred embodiment(s) of the low solids coating composition disclosed herein, taken alone or in any combination, may preferably apply to the aqueous cheese coating compositions according to the invention. The low solids coating composition according to the method for providing a coated cheese may be preferably selected as the aqueous cheese coating composition according to the present invention.

### Further embodiments

As an alternative to the aqueous cheese coating composition according to the invention, the invention also provides an aqueous cheese coating composition having a solids content selected from the range of 15-34 wt.%, preferably 20-34 wt.%, more preferably 24-32 wt.% with respect to the total weight of the composition, which consists of (1) a polymer obtainable by emulsion polymerisation, (2) an organic thickener, preferably in an amount of 0.1-7 wt.% with respect to the total weight of the composition (3) and optionally, one or more organic additives in an amount of 0.001-3 wt.% relative to the total weight of the composition, wherein preferably less than 1 wt.%, more preferably less than 0.5 wt.%, of the solids content of the cheese coating composition is provided as ashes.

This aqueous cheese coating composition especially preferably comprises less than 1 wt.%, more preferably less than 0.5 wt.% most preferably less than 0.25 wt.% with respect to the weight of the aqueous cheese coating composition of particles of a sheet-like water-swellable material, in particular of water-swellable clay, especially of natural sodium bentonite clay.

As another alternative to the cheese coating composition according to the invention, the invention further provides an aqueous cheese coating composition having a solids content selected from the range of 15-34 wt.%, preferably 20-34 wt.% with respect to the total weight of the composition, comprising a polymer obtainable by emulsion polymerisation and an organic thickener which is preferably selected from the group consisting of a poly(vinyl alcohol), poly(vinyl pyrrolidone), xanthan gum, guar gum, locust bean gum, carrageenan, hydroxyethylcellulose, hydroxypropylcellulose, hydroxypropylmethylcellulose, carboxymethylcellulose or a salt thereof, and methylcellulose, and wherein the cheese coating composition has a Brookfield viscosity, when measured at room temperature, of 1-20 Pa.s, more preferably of 2-10 Pa.s. Herein, the aqueous cheese coating composition is essentially free of particles from a sheetlike water-swellable material, and specifically water-swellable clay particles. Herein, "essentially free" preferably relates to "less than 0.5 wt.%, more preferably less than 0.25 wt.% based on the weight of the polymer obtainable by emulsion polymerisation".

Any preferred embodiment(s) of the low solids coating composition disclosed herein, taken alone or in any combination, may preferably apply to these alternative aqueous cheese coating compositions.

The invention also provides a cheese obtainable by the method for providing a coated cheese, wherein the high solids cheese coating composition comprises a lower amount of an organic thickener, relative to the solids content of the high solids composition, as compared with the low solids cheese coating composition. It is noted that although the coating layers which have been subsequently applied, with intermittent drying, to the coated cheese are not visually distinguishable neither can they manually be peeled apart from one another, and all coating layers applied together effectively form one film covering the surface of the cheese. The film covering the surface of the coated and ripened cheese which is obtainable according to the above-mentioned method is characterized in that the part of the film in direct contact with the rind of the cheese, preferably having a thickness of 10-70 µm, comprises, on average, a lower amount of an organic thickener relative to the total solids content that part of the film, as compared with the remainder part of the film which further extends from the rind of the cheese and is not in direct contact therewith. The amount of the organic thickener in a part of a film, relative to the total solids content of the part of the film is preferably determined using a soaking test, wherein said fraction is calculated as the dry weight of a part of a film which after soaking in water at room temperature for 48 hours has dissolved therein divided by the dry weight of the part of the film before the start of the soaking test. The coated and ripened cheese preferably comprises a dried film formed from a water-borne polymer dispersion covering its surface, the film having an average thickness of 100-1000 µm, more preferably 200-800 µm, most preferably 250-700 µm.

The invention also provides a use of an aqueous cheese coating composition having a solids content selected from the range of 10-35 wt.%, preferably 20-34 wt.%, more preferably of 24-32wt.% relative to the total weight of the composition for improving cutting or slicing properties of a cheese coated therewith, wherein the water-borne cheese coating composition comprises a polymer obtainable by emulsion polymerisation. The aqueous cheese coating composition is preferably the low solids coating composition.

The invention also provides a use of the aqueous cheese coating composition according to the invention for coating a cheese.

In particular the invention further provides a method for coating a cheese, comprising applying a layer of the low solids coating composition to the top and at least part of the edge of the cheese, allowing the applied coating to dry at a relative humidity of 60-85%, more preferably of 65-83%, more preferably 70-82% and turning the cheese. Whilst the cheese receives this coating treatment and whilst the applied coating layer is allowed to dry, it preferably resides on a support, most preferably a wooden shelf. Preferably this sequence of applying-drying-turning is repeated at least once. The applied coating is allowed to dry at a temperature of preferably 4-25 °C, more preferably at a temperature of 8-18 °C, most preferably at a temperature of 10-14 °C. Accordingly, it has been found that a film formed from said low solids coating composition may form which is substantially non-tacky whilst evaporative water loss from the cheese can be controlled to still acceptable levels. The cheese is preferably a semi-hard or hard cheese which preferably has a flat-cylindrical or block shape, and is further preferably selected from the group consisting of Emmental, Gruyere, Tilsit, Danbo, and a Gouda-type cheese. The formation of a non-tacky film is extremely important in this method because after turning the dried coating layer which was previously applied will come into direct contact with a support, typically a wooden shelf. Any significant occurrence of tack phenomena will lead to damage of this dried coating layer if the cheese is removed from the support, for example as part of turning the cheese in a following coating treatment. The damaged part is especially vulnerable to microbial attack, particularly by fungi. Said absence of significant tackiness may even be manifested under these conditions if before the first layer of coating is applied, the cheese is provided as a freshly brined cheese, wherein the freshly brined cheese has preferably left the brine bath between 0-48 hours before it receives its first coating treatment (with the low solids coating composition). The invention also relates to a cheese obtainanable by this method.

### EXAMPLES

### Example 1. Preparation of high solids and low solids coating compositions

The following aqueous cheese coating compositions were prepared by mixing the indicated ingredients in the amounts (expressed in g) indicated in Table 1.

**Table 1. Formulation and physico-chemical characteristics of a high solids (sample 1) and a low solids (sample 2) coating composition comprising a vinyl acetate-dibutyl maleate copolymer.**

| **Ingredient** | | **Sample number** | |
|---|---|---|---|
| | | **1** | **2** |
| Mowilith 4230 ⁽¹⁾ | | 1795 | 1500 |
| Tap water | | 205 | 300 |
| Xanthan (aq) ⁽²⁾ | | | 450 |
| | | | |

| | **Property** | | |
|---|---|---|---|
| | Viscosity immediately after preparation, mPa.s ^{(a)} | 3760 | 4280 |
| | pH (@ 23°C) | 4,43 | 4,49 |
| | Solids content, wt.% ^{(b)} | 40,44 | 30,55 |
| | Viscosity, 26 days after preparation, mPa.s ^{(a)} | 3420 | 4280 |

| | | | |
|---|---|---|---|
| *Legend to Table 1* ⁽¹⁾Mowilith SDM 4230 KL, a copolymer dispersion of vinyl acetate and dibutylmaleate, obtained by emulsion polymerisation in the presence of poly(vinyl alcohol) as a protective colloid, acquired from Celanese Emulsions GmbH, Germany. The solids content of this copolymer dispersion is approx. 45 wt.% with respect to the weight of the composition. ⁽²⁾An aqueous solution prepared by dissolving 2 wt.% xanthan gum (Keltrol T, ex CP Kelco) into water. The resulting solution has a viscosity^{(a)} of 3640 mPa.s ^{(a)}Specified as the Brookfield viscosity of the aqueous cheese coating compositions determined according to a method based on ISO 2555 (2^{nd} edition, 1989-02-01; corrected and reprinted 1990-02-01). The viscosity of the coating composition was measured at 23 °C using a Brookfield viscometer of type LVDV-E, operated at speed 30 rpm, and using spindle number 4. Before use, the viscosity meter was levelled and the spindle was attached to the apparatus. The spindle was then immersed into the coating composition up to the mark on the spindle. The measurement was started and the result was taken at steady state or after one minute. ^{(b)}The solid matter content of the aqueous cheese coating compositions was determined according to a method based on ISO 1625 (2^{nd} edition, 1998-02-15). Herein, a small amount of the coating composition was weighed onto a flat surface provided by a first culture dish (diameter ± 60 mm), and a surface of a second culture dish was pressed against the surface of the first culture dish, comprising the coating composition. The weights of the two culture disks were known to the nearest mg. A thin film of the coating composition was applied on the two surfaces of the culture dishes by gently moving the touching surfaces in circular or ellipsoidal orbits. The dishes were then separated to expose their coated surfaces to the atmosphere. The dishes were then transferred into an oven which was heated to 105°C, and were left at that temperature for one hour. Afterwards, the dishes were transferred into a desiccator and allowed to cool to room temperature. The dishes were weighed with the attached films to the nearest 1 mg, and the solid matter content was calculated from the difference between the mass of the applied wet coating composition and the weight of the dry film. | | | |

### Example 2. Coating of cheeses

The high solids coating composition and the low solids coating composition according to Example 1 can suitably be employed in the method according to the present invention. More in particular, a freshly brined 12 kg Gouda cheese wheel (having a flat-cylindrical shape) receives 4 half-sided coating treatments with coating sample 1 and subsequently 14 half-sided coating treatments with coating sample 2, further according to a traditional coating protocol for Gouda cheese until the cheese has obtained a desired ripening time of approx. 3 months. Herein, each half-sided coating treatment comprises applying 10-25 gram of a coating composition on the top of the cheese and to the upper half part of the edges.. After each half sided coating treatment, the coated layer is allowed to dry for at least 24 hours and under conditions of controlled temperature and relative humidity (13 °C and 83-90% RH, respectively). Before applying the next half-sided coating layer, the cheese is turned. The first layer of coating sample 2 is applied on the 10^{th} day after applying the first layer of coating sample 1 onto the freshly brined cheese.

## Claims

1. A method for providing a coated cheese comprising
a. coating at least part of a cheese with a high solids coating composition and
b. coating at least part of the cheese thus obtained with a low solids coating composition, wherein
- the high solids coating composition is an aqueous cheese coating composition and comprises a solids content selected from the range of 35-80 wt.% with respect to the total weight of the high solids coating composition;
- the low solids coating composition is an aqueous cheese coating composition and comprises a solids content selected from the range of 15-40 wt.% with respect to the total weight of the low solids coating composition; and
- the selected solids content of the low solids coating composition is at least 10% lower than the selected solids content of the high solids coating composition

2. The method according to claim 1, wherein before coating with the high solids coating composition under (a.), the cheese is provided as a freshly brined cheese.

3. The method according to any one of the preceding claims, wherein coating at least part of the cheese with the high solids coating composition comprises
i. Applying a layer of the high solids coating composition to the top and at least part of the edge of the cheese; and
ii. Allowing the applied coating to dry.

4. The method according to claim 3, wherein the sequence application (i.) - drying (ii.) is repeated at least once, preferably 2-8 times, more preferably 3-6 times, and wherein before application of each subsequent layer of the high solids coating composition the cheese is turned.

5. The method according to any one of the preceding claims, wherein coating at least part of the cheese with the low solids coating composition comprises
I. Applying a layer of the low solids coating composition to the top and at least part of the edge of the cheese; and
II. Allowing the applied coating to dry on the cheese.

6. The method according to claim 5, wherein the sequence application (I.) - drying (II.) is repeated at least once, preferably 2-60 times, more preferably 6-50 times and wherein before application of each subsequent layer of the low solids coating composition the cheese is turned.

7. The method according to any one of the preceding claims, wherein after at least part of the cheese has been coated with the high solids composition in (a.), at least part of the cheese thus obtained is exclusively coated with the low solids coating composition, until the cheese has obtained a desired degree of ripening.

8. The method according to any one of the preceding claims wherein the high solids coating composition has a solids content selected from the range of 38-65 wt.% and wherein the low solids coating composition has a solids content selected from the range of 20-34 wt.%

9. The method according to any one of the preceding claims, wherein the high solids coating composition and the low solids coating composition comprise a polymer obtainable by emulsion polymerisation, optionally in the presence of a protective colloid.

10. The method according to any one of the preceding claims, wherein the high solids coating composition and the low solids coating composition each have a Brookfield viscosity, when measured at room temperature, of 1-15 Pa.s, preferably of 2-8 Pa.s.

11. The method according to any one of the preceding claims, wherein the low solids coating composition has a solids content selected from the range of 20-34 wt.% with respect to the total weight of the composition, and comprises a polymer obtainable by emulsion polymerisation and an organic thickener selected from the group consisting of a poly(vinyl alcohol), poly(vinyl pyrrolidone), xanthan gum, guar gum, locust bean gum, carrageenan, hydroxyethylcellulose, hydroxypropylcellulose, hydroxypropylmethylcellulose, carboxymethylcellulose or a salt thereof, and methylcellulose, wherein the aqueous cheese coating composition is essentially free of particles from a sheetlike water-swellable material, and specifically water-swellable clay particles.

12. An aqueous cheese coating composition having a solids content selected from the range of 20-34 wt.% with respect to the total weight of the composition, comprising a polymer obtainable by emulsion polymerisation and an organic thickener selected from the group consisting of a poly(vinyl alcohol), poly(vinyl pyrrolidone), xanthan gum, guar gum, locust bean gum, carrageenan, hydroxyethylcellulose, hydroxypropylcellulose, hydroxypropylmethylcellulose, carboxymethylcellulose or a salt thereof, and methylcellulose, wherein the aqueous cheese coating composition is essentially free of particles from a sheetlike water-swellable material, and specifically water-swellable clay particles; and wherein the aqueous cheese coating composition has a Brookfield viscosity, when measured at room temperature, of 1-15 Pa.s, preferably of 2-8 Pa.s.

13. The aqueous cheese coating composition according to claim 12, wherein the organic thickener is present in a total amount of 0.1-10 wt.%, more preferably in an amount of 0.25-8 wt.%, with respect to the weight of the aqueous cheese coating composition.

14. The aqueous cheese coating composition according to claim 12, wherein the organic thickener is present in a total amount of 0.5-5 wt.% with respect to the weight of the aqueous cheese coating composition.

15. The method according to any one of claims 1-11, wherein the low solids coating composition is selected as the aqueous cheese coating composition according to any one of claims 12-14.

## Patentansprüche

1. Verfahren zur Bereitstellung eines beschichteten Käses umfassend:
a. Beschichten zumindest eines Teils eines Käses mit einer Beschichtungszusammensetzung mit hohem Feststoffgehalt und
b. Beschichten zumindest eines Teils des so erhaltenen Käses mit einer Beschichtungszusammensetzung mit niedrigem Feststoffgehalt, wobei
- die Beschichtungszusammensetzung mit hohem Feststoffgehalt eine wässrige Käse-Beschichtungszusammensetzung ist und einen Feststoffanteil ausgewählt aus dem Bereich von 35-80 Gew.-% in Bezug auf das Gesamtgewicht der Beschichtungszusammensetzung mit hohem Feststoffgehalt umfasst;
- die Beschichtungszusammensetzung mit niedrigem Feststoffgehalt eine wässrige Käse-Beschichtungszusammensetzung ist und einen Feststoffanteil ausgewählt aus dem Bereich von 15-40 Gew.-% in Bezug auf das Gesamtgewicht der Beschichtungszusammensetzung mit niedrigem Feststoffgehalt umfasst; und
- der ausgewählte Feststoffanteil der Beschichtungszusammensetzung mit niedrigem Feststoffgehalt zumindest 10% niedriger als der ausgewählte Feststoffgehalt der Beschichtungszusammensetzung mit hohem Feststoffanteil ist

2. Verfahren nach Anspruch 1, wobei vor Beschichten mit der Beschichtungszusammensetzung mit hohem Feststoffgehalt unter (a), der Käse als frisch geriebener Käse bereitgestellt wird.

3. Verfahren nach einem der vorstehenden Ansprüche, wobei Beschichten zumindest eines Teils des Käses mit der Beschichtungszusammensetzung mit hohem Feststoffgehalt umfasst
i. Aufbringen einer Schicht der Beschichtungszusammensetzung mit hohem Feststoffgehalt auf der Oberseite und zumindest einen Teil der Kante des Käses, und
ii. Erlauben der aufgebrachten Beschichtung zu trocknen.

4. Verfahren nach Anspruch 3, wobei die Sequenz Aufbringen (i.) - Trocknen (ii.) zumindest einmal, bevorzugt 2-8 mal, bevorzugter 3-6 mal, wiederholt wird und wobei vor Aufbringen jeder darauffolgenden Schicht der Beschichtungszusammensetzung mit hohem Feststoffgehalt der Käse gedreht wird.

5. Verfahren nach einem der vorstehenden Ansprüche, wobei Beschichten zumindest eines Teils des Käses mit einer Beschichtungszusammensetzung mit niedrigem Feststoffgehalt umfasst
I. Aufbringen einer Schicht der Beschichtungszusammensetzung mit niedrigem Feststoffgehalt auf der Oberseite und zumindest einen Teil der Kante des Käses, und
II. Erlauben der aufgebrachten Beschichtung zu trocknen.

6. Verfahren nach Anspruch 5, wobei die Sequenz Aufbringen (I.) - Trocknen (II.) zumindest einmal, bevorzugt 2-60 mal, bevorzugter 6-50 mal, wiederholt wird und wobei vor Aufbringen jeder darauffolgenden Schicht der Beschichtungszusammensetzung mit niedrigem Feststoffgehalt der Käse gedreht wird.

7. Verfahren nach einem der vorstehenden Ansprüche, wobei nachdem zumindest Teil des Käses mit der Beschichtungszusammensetzung mit hohem Feststoffgehalt aus (a) beschichtet wurde, zumindest Teil des so erhaltenen Käses ausschließlich mit der Beschichtungszusammensetzung mit niedrigem Feststoffgehalt beschichtet wird, bis der Käse einen erwünschten Grad an Reifung erlangt hat.

8. Verfahren nach einem der vorstehenden Ansprüche, wobei die Beschichtungszusammensetzung mit hohem Feststoffgehalt einen Feststoffanteil ausgewählt aus dem Bereich von 38-65 Gew.-% aufweist und wobei die Beschichtungszusammensetzung mit niedrigem Feststoffgehalt einen Feststoffanteil ausgewählt aus dem Bereich von 20-34 Gew.-% aufweist.

9. Verfahren nach einem der vorstehenden Ansprüche, wobei die Beschichtungszusammensetzung mit hohem Feststoffgehalt und die Beschichtungszusammensetzung mit niedrigem Feststoffgehalt ein durch Emulsionspolymerisation, optional in der Gegenwart von einem Schutzkolloid, erhältliches Polymer umfassen.

10. Verfahren nach einem der vorstehenden Ansprüche, wobei die Beschichtungszusammensetzung mit hohem Feststoffgehalt und die Beschichtungszusammensetzung mit niedrigem Feststoffgehalt jeweils eine Brookfield-Viskosität, wenn bei Raumtemperatur gemessen wird, von 1-15 Pa.s, vorzugsweise von 2-8 Pa.s aufweisen.

11. Verfahren nach einem der vorstehenden Ansprüche, wobei die Beschichtungszusammensetzung mit niedrigem Feststoffgehalt einen Feststoffanteil ausgewählt aus dem Bereich von 20-34 Gew.-% in Bezug auf das Gesamtgewicht der Zusammensetzung aufweist und ein durch Emulsionspolymerisation erhältliches Polymer und ein organisches Verdickungsmittel ausgewählt aus der Gruppe bestehend aus einem Poly(vinylalkohol), Poly(vinylpyrrolidon), Xanthan Gum, Guargummi, Johannisbrotkernmehl, Carrageenan, Hydroxyethylcellulose, Hydroxypropylcellulose, Hydroxypropylmethylcellulose, Carboxymethylcellulose oder ein Salz davon und Methylcellulose umfasst, wobei die wässrige Käse-Beschichtungszusammensetzung im Wesentlichen frei von Teilchen von einem blattähnlichen wasser-quellbaren Material und speziell wasser-quellbaren Tonteilchen ist.

12. Wässrige Käse-Beschichtungszusammensetzung mit einem Feststoffanteil ausgewählt aus dem Bereich von 20-34 Gew.-% in Bezug auf das Gesamtgewicht der Zusammensetzung, umfassend ein durch Emulsionspolymerisation erhältliches Polymer und ein organisches Verdickungsmittel ausgewählt aus der Gruppe bestehend aus einem Poly(vinylalkohol), Poly(vinylpyrrolidon), Xanthan Gum, Guargummi, Johannisbrotkernmehl, Carrageenan, Hydroxyethylcellulose, Hydroxypropylcellulose, Hydroxypropylmethylcellulose, Carboxymethylcellulose oder ein Salz davon und Methylcellulose, wobei die wässrige Käse-Beschichtungszusammensetzung im Wesentlichen frei von Teilchen von einem blattähnlichen wasser-quellbaren Material und speziell wasser-quellbaren Tonteilchen ist; und wobei die wässrige Käse-Beschichtungszusammensetzung eine Brookfield-Viskosität, wenn bei Raumtemperatur gemessen wird, von 1-15 Pa.s, bevorzugt von 2-8 Pa.s aufweist.

13. Wässrige Käse-Beschichtungszusammensetzung nach Anspruch 12, wobei das organische Verdickungsmittel in einer Gesamtmenge von 0,1-10 Gew.-%, bevorzugter in einer Gesamtmenge von 0,25-8 Gew.-%, in Bezug auf das Gesamtgewicht der wässrigen Käse-Beschichtungszusammensetzung vorliegt.

14. Wässrige Käse-Beschichtungszusammensetzung nach Anspruch 12, wobei das organische Verdickungsmittel in einer Gesamtmenge von 0,5-5 Gew.-% in Bezug auf das Gesamtgewicht der wässrigen Käse-Beschichtungszusammensetzung vorliegt.

15. Das Verfahren nach einem der Ansprüche 1-11, wobei die Beschichtungszusammensetzung mit niedrigem Feststoffgehalt als die wässrige Käse-Beschichtungszusammensetzung nach einem der Ansprüche 12-14 ausgewählt ist.

## Revendications

1. Procédé de réalisation d'un fromage enrobé, comprenant
a. l'enrobage d'au moins une partie d'un fromage par une composition d'enrobage à forte teneur en matière sèche et
b. l'enrobage d'au moins une partie du fromage ainsi obtenu par une composition d'enrobage à faible teneur en matière sèche, dans lequel
- la composition d'enrobage à forte teneur en matière sèche est une composition aqueuse d'enrobage de fromage et comprend une teneur en matière sèche choisie entre 35 et 80 % en poids par rapport au poids total de la composition d'enrobage à forte teneur en matière sèche ;
- la composition d'enrobage à faible teneur en matière sèche est une composition aqueuse d'enrobage de fromage et comprend une teneur en matière sèche choisie entre 15 et 40 % en poids par rapport au poids total de la composition d'enrobage à faible teneur en matière sèche ; et
- la teneur en matière sèche choisie de la composition d'enrobage à faible teneur en matière sèche est inférieure d'au moins 10% à la teneur en matière sèche choisie de la composition d'enrobage à forte teneur en matière sèche.

2. Procédé selon la revendication 1, dans lequel avant son enrobage par la composition d'enrobage à forte teneur en matière sèche selon l'étape (a.), le fromage est fourni sous forme de fromage fraîchement saumuré.

3. Procédé selon l'une quelconque des revendications précédentes, dans lequel l'enrobage d'au moins une partie du fromage par la composition d'enrobage à forte teneur en matière sèche comprend
i. L'application d'une couche de la composition d'enrobage à forte teneur en matière sèche sur le dessus et au moins une partie du bord du fromage ; et
ii. Le séchage de l'enrobage appliqué.

4. Procédé selon la revendication 3, dans lequel la séquence d'application (i.) - séchage (ii.) est répétée au moins une fois, de préférence entre 2 et 8 fois, de préférence encore entre 3 et 6 fois, et dans lequel le fromage est retourné avant l'application de chaque couche suivante de la composition d'enrobage à forte teneur en matière sèche.

5. Procédé selon l'une quelconque des revendications précédentes, dans lequel l'enrobage d'au moins une partie du fromage par la composition d'enrobage à faible teneur en matière sèche comprend
I. L'application d'une couche de la composition d'enrobage à faible teneur en matière sèche sur le dessus et au moins une partie du bord du fromage ; et
II. Le séchage de l'enrobage appliqué sur le fromage.

6. Procédé selon la revendication 5, dans lequel la séquence d'application (I.) - séchage (II.) est répétée au moins une fois, de préférence entre 2 et 60 fois, de préférence encore entre 6 et 50 fois et dans lequel le fromage est retourné avant l'application de chaque couche suivante de la composition d'enrobage à faible teneur en matière sèche.

7. Procédé selon l'une quelconque des revendications précédentes, dans lequel après avoir effectué l'enrobage d'au moins une partie du fromage par la composition à forte teneur en matière sèche en (a.), on effectue l'enrobage d'au moins une partie du fromage ainsi obtenu exclusivement par la composition d'enrobage à faible teneur en matière sèche jusqu'à ce que le fromage ait atteint un degré souhaité d'affinage.

8. Procédé selon l'une quelconque des revendications précédentes, dans lequel la composition d'enrobage à forte teneur en matière sèche présente une teneur en matière sèche choisie entre 38 et 65 % en poids et dans lequel la composition d'enrobage à faible teneur en matière sèche présente une teneur en matière sèche choisie entre 20 et 34 % en poids.

9. Procédé selon l'une quelconque des revendications précédentes, dans lequel la composition d'enrobage à forte teneur en matière sèche et la composition d'enrobage à faible teneur en matière sèche comprennent un polymère pouvant être obtenu par polymérisation en émulsion, optionnellement en présence d'un colloïde protecteur.

10. Procédé selon l'une quelconque des revendications précédentes, dans lequel la composition d'enrobage à forte teneur en matière sèche et la composition d'enrobage à faible teneur en matière sèche présentent chacune une viscosité Brookfield, mesurée à température ambiante, comprise entre 1 et 15 Pa.s, de préférence entre 2 et 8 Pa.s.

11. Procédé selon l'une quelconque des revendications précédentes, dans lequel la composition d'enrobage à forte teneur en matière sèche présente une teneur en matière sèche comprise entre 20 et 34% en poids par rapport au poids total de la composition et comprend un polymère pouvant être obtenu par polymérisation en émulsion et un agent épaississant organique choisi dans le groupe comprenant les alcools polyvinyliques, la polyvinylpyrrolidone, la gomme xanthane, la gomme de guar, la gomme de caroube, les carraghénanes, l'hydroxyéthylcellulose, l'hydroxypropylcellulose, l'hydroxypropylméthylcellulose, la carboxyméthylcellulose ou un sel de celle-ci et la méthylcellulose, dans lequel la composition aqueuse d'enrobage du fromage est essentiellement dépourvue de particules en provenance d'un matériau sous forme de feuille apte à gonfler en présence d'eau et particulièrement de particules d'argile aptes à gonfler en présence d'eau.

12. Composition aqueuse d'enrobage de fromage présentant une teneur en matière sèche choisie entre 20 et 34 % en poids par rapport au poids total de la composition, comprenant un polymère pouvant être obtenu par polymérisation en émulsion et un agent épaississant organique choisi dans le groupe comprenant les alcools polyvinyliques, la polyvinylpyrrolidone, la gomme xanthane, la gomme de guar, la gomme de caroube, les carraghénanes, l'hydroxyéthylcellulose, l'hydroxypropylcellulose, l'hydroxypropylméthylcellulose, la carboxyméthylcellulose ou un sel de celle-ci et la méthylcellulose, dans laquelle la composition aqueuse d'enrobage du fromage est essentiellement dépourvue de particules en provenance d'un matériau sous forme de feuille apte à gonfler en présence d'eau et particulièrement de particules d'argile aptes à gonfler en présence d'eau ; et dans laquelle la composition aqueuse d'enrobage de fromage présente une viscosité Brookfield, mesurée à température ambiante, comprise entre 1 et 15 Pa.S, de préférence entre 2 et 8 Pa.s.

13. Composition aqueuse d'enrobage de fromage selon la revendication 12, dans laquelle la quantité totale d'agent épaississant organique en présence est comprise entre 0,1 et 10 % en poids, de préférence entre 0,25 et 8 % en poids par rapport au poids de la composition aqueuse d'enrobage de fromage.

14. Composition aqueuse d'enrobage de fromage selon la revendication 12, dans laquelle la quantité totale d'agent épaississant organique en présence est comprise entre 0,5 et 5 % en poids par rapport au poids de la composition aqueuse d'enrobage de fromage.

15. Procédé selon l'une quelconque des revendications 1 à 11, dans lequel on choisit pour la composition d'enrobage à faible teneur en matière sèche une composition aqueuse d'enrobage de fromage selon l'une quelconque des revendications 12 à 14.
